# EUROPEAN PATENT SPECIFICATION

(11) **EP 2 303 660 B1**
(45) Date of publication and mention of the grant of the patent: **15.02.2017**
(21) Application number: 09762020.7
(22) Date of filing: 12.06.2009
(51) Int. Cl.: B60T 17/04

(54) **AIR BRAKE CONNECTION SYSTEM**
LUFTBREMSENVERBINDUNGSSYSTEM
SYSTÈME DE CONNEXION DE FREIN PNEUMATIQUE

(30) Priority: 12.06.2008 GB 0810783; 12.12.2008 GB 0822673
(43) Date of publication of application: 06.04.2011
(73) Proprietor: Morris, Colin Anthony, Worcestershire WR6 5HJ (GB)
(72) Inventor: Morris, Colin Anthony, Worcestershire WR6 5HJ (GB)
(74) Representative: Jackson, Derek Charles
(86) International application number: PCT/GB2009/050667
(87) International publication number: WO 2009/150471

(56) References cited:
- JP-A- 2002 193 099
- US-A- 1 542 173
- US-A- 1 973 610
- US-A- 2 330 413
- US-A- 2 742 975
- US-A- 2 879 081
- US-A- 5 918 640
- US-A1- 2006 043 731
- US-A1- 2006 151 038

## Description

The present invention relates to an air brake hose system, and to a system for connecting air brake hoses.

An articulated lorry, comprising a tractor and trailer, has flexible air brake lines or hoses extending between tractor and trailer. These are coils of nylon tubing, known as Susie coils. For uncoupling of the trailer, the hoses are disconnectable from the trailer. In use, the tractor maintains an elevated air pressure in those airlines that communicate with the trailer, and as long as the pressure is maintained above a threshold value the brakes are not applied, while if the pressure drops below the threshold value the brakes are applied. For example the threshold value may be 65 psi (4.3 bar).

The hoses are subject to considerable wear and tear. They are liable to fail. Failure of the primary air hose causes the brakes of both the tractor and trailer to be applied. The vehicle cannot be moved until the hose has been repaired.

Generally repair must be carried out by a qualified fitter. The driver of the vehicle is not permitted under safety regulations to make repairs to the hoses.

Conventionally, air brake hoses are permanently connected to the tractor and uncouplably connected to the trailer.

It is known in a different automotive application to provide air line extensions for inflating tyres and the like with male and female quick release couplings at opposite ends.

US2006/151038 discloses a coiled air brake hose assembly including a coiled hose having a terminal end and defining a lumen. The coiled air brake hose assembly also includes a fitting moulded over the hose at the terminal end and providing access to the lumen. The fitting conforms to and bonds to an outer surface of the coiled hose.

Document US 1 973 610 discloses an air brake connection system according to the preamble of claim 1.

JP2002193099 discloses a solution to the problem of uniformly adjusting an initial wheel load regardless of a twist of a car body when adjusting the height of air springs after installing the car body of a railway rolling stock on bogies, and of eliminating wheel load difference when the rolling stock travels. This is accomplished by arranging automatic height adjusting valves on the air springs of the bogies. The air springs of the bogies are connected by a bypass passage. The bypass passage is composes of fixed pipes and a connecting hose. The connecting hose can be attached and detached via couplers with a self-seal function. Manual opening-closing valves are interposed in the respective fixed pipes.

The object of the present invention is to provide an improved air brake hose system.

According to the invention there is provided an air brake connection system comprising primary and secondary tractor couplings, primary and secondary trailer couplings, and primary and secondary hoses, each hose having couplings at its opposite ends that are uncouplably connectable to the respective tractor coupling and to the respective trailer coupling, wherein the primary hose includes a male coupling at the tractor end thereof coupling with the female primary tractor coupling, and a female coupling at the trailer end thereof coupling with the male primary trailer coupling, the female coupling including a self-sealing valve, and wherein the secondary hose includes a female coupling at the tractor end thereof coupling with the male secondary tractor coupling, and a male coupling at the trailer end thereof coupling with the secondary female tractor coupling, the male coupling including a self-sealing valve, and wherein the tractor couplings and the couplings at the tractor end of each hose are of different diameter to the trailer coupling and the couplings at the trailer end of the respective hose.

In use, should a hose fail, it is uncoupled from both tractor and trailer and replaced with a spare hose. This is a few minutes job, involving no skill on behalf of the driver beyond that with which he is used in coupling his tractor to a trailer, when he has to couple the air hoses.

Preferably the primary and secondary tractor couplings each include a self-sealing valve.

In the preferred embodiment, the tractor ends of the hoses are locked to the tractor, to avoid their unauthorised removal. For example, they may be enclosed within a lockable box.

The tractor end of each of the primary and secondary hoses may be provided with an oval plastic moulding.

The present invention also provides a repair kit for an air brake connection system as hereinbefore defined, the repair kit comprising replacement primary and secondary hoses, each hose having couplings at its opposite ends that are uncouplably connectable to a respective tractor coupling and to a respective trailer coupling, wherein the primary hose includes a male coupling at a tractor end thereof coupling with a female primary tractor coupling, and a female coupling at a trailer end thereof coupling with a male primary trailer coupling, the female coupling including a self-sealing valve, and wherein the secondary hose includes a female coupling at a tractor end thereof coupling with a male secondary tractor coupling, and a male coupling at a trailer end thereof coupling with a secondary female tractor coupling, the male coupling including a self-sealing valve, and wherein the couplings at the tractor end of each hose are of different diameter to the couplings at the trailer end of the respective hose. The tractor end of each of the primary and secondary hoses forming the repair kit may be provided with an oval plastic moulding.

To help understanding of the invention, specific embodiments will now be described, by way of example only, and with reference to the accompanying drawings, in which:
Figure 1 is a scrap diagrammatic view of a tractor and trailer and their brake hoses, the embodiment not forming part of the present invention;
Figure 2 is a more detailed plan view of the tractor end of the hoses connected to the tractor;
Figure 3 is a perspective view of a locking box for the tractor end of the hoses; and
Figure 4 shows a perspective view of brake hoses in accordance with the present invention for use with a tractor and trailer as in Figure 1.

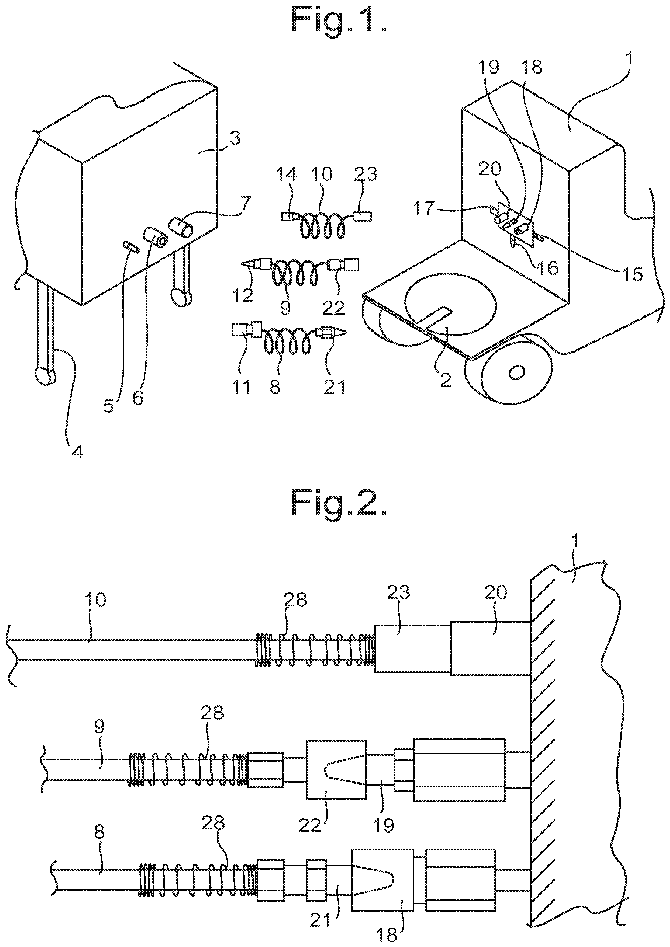

Referring to the drawings, Figure 1 shows in scrap view the rear of a tractor 1 including its towing turntable 2, and a scrap view of a semi-trailer 3 with its parking legs 4. In the typical arrangement the tractor 1 and trailer 3 must be linked by a primary or emergency air line (typically a red hose), and by a secondary or regular air line (typically a yellow hose), and by an electrical cable. The trailer 3 in this example has conventional air line couplings, namely a male, primary or supply line coupling 5, and a female secondary line coupling 6; there is also a coupling 7 for an electrical control cable. Between the tractor and trailer are diagrammatically shown coiled primary and secondary air line hoses 8 and 9, and an electrical control cable 10. These have female primary and male secondary couplings 11 and 12, and a conventional electrical connector 14, at the ends connectable to the trailer 3. The couplings 11 and 12 both include self sealing valves (not visible) to provide that the lines are sealed when the hoses 8 and 9 are disconnected.

The tractor 1 has conventional dummy couplings 15, 16, 17 for receiving the ends of the hose end couplings 11, 12 and the connector 14 when not in use.

Referring also to Figure 2, the tractor 1 also has self-sealing couplings 18 and 19 which are equivalent to the self- sealing couplings 11 and 12, although fixedly connected as opposed to being connected to the hoses 8 and 9. There is also an electrical connector 20. The tractor ends of the hoses 8 and 9 have couplings 21 and 22 which are equivalent to the trailer fixed couplings 5 and 6.

The tractor end of the control cable 10 includes a conventional electrical connector 23 connectable to the connector 20. In Figure 2 the hoses 8 and 9 are shown connected to the self-sealing couplings 18 and 19 on the tractor 1, the male elements being shown in broken lines. Thus each hose 8 and 9 (and indeed also the electrical cable 10) can be disconnected from the trailer 3 routinely, and can whenever necessary be disconnected from the tractor 1 for replacement. The hoses are not inter-changeable, because the respective couplings are provided in complementary pairs which do not interconnect - in accordance with British Standard BS AU 138b: 2000.

For simplicity in construction, the self-sealing couplings 18 and 19 fixed to the tractor 1 may be substantially identical to the self-sealing couplings 11 and 12 on the trailer end of the hoses 8 and 9.

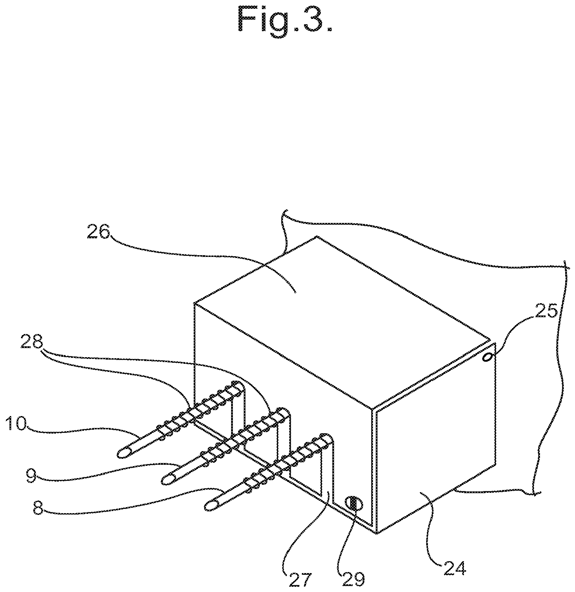

As shown in Figure 3 (but not in Figures 1 and 2), the tractor couplings are provided with a locking box 24 with a hinge 25 for a closure 26. This has slots 27 through which the hoses protrude in use at their spiral wire protectors 28. When a lock 29 is engaged, the hoses cannot be removed from the tractor 1.

Preferably the air hoses 8 and 9 are colour-coded in the conventional way. Hence the set of air hoses 8 and 9 that are in use would consist of a red hose 8 and a yellow hose 9. The red hose 8 would have a female coupling 11 that incorporates a self-sealing valve at one end, and a male coupling 21 at the opposite end. Similarly the yellow hose 9 would have a male coupling 12 that incorporates a self-sealing valve at one end, and a female coupling 22 at the opposite end. The driver would carry an identical pair of such red and yellow hoses 8 and 9 for use in the case of failure in one of the air hoses.

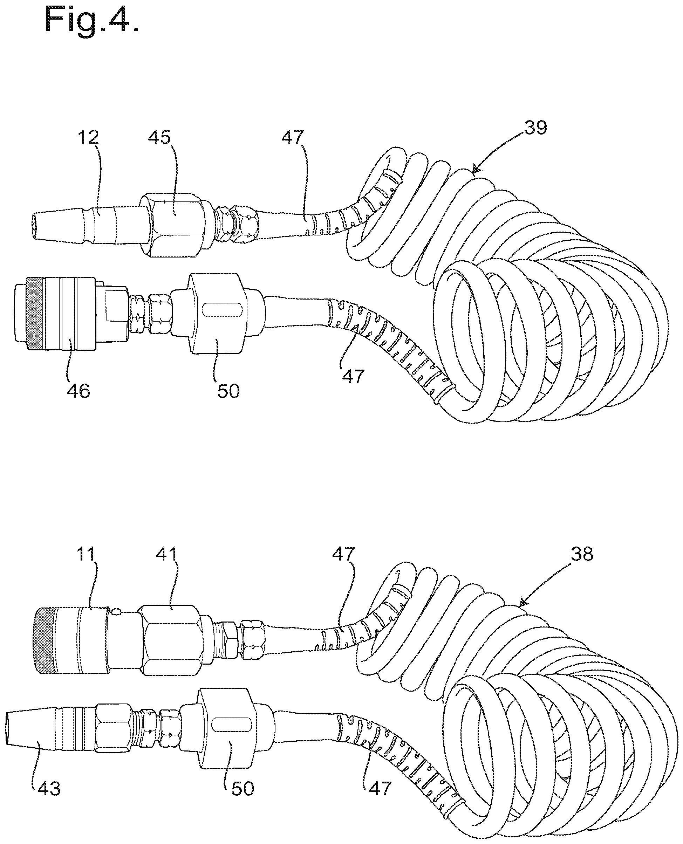

Referring now to Figure 4 there are shown a replacement red hose 38 and a replacement yellow hose 39 for use a braking system as described above. Such a pair of replacement hoses 38 and 39 might constitute a repair kit to be carried in the cab of the tractor 1. In a similar way to that described above, the red hose 38 is provided with a female coupling 11 that incorporates a self-sealing valve 41 at the end for connection to the trailer 3, and a male coupling 43 at the end for connection to the tractor 1. The yellow hose 39 is provided with a male coupling 12 incorporating a self- sealing valve 45 at the end for connection to the trailer 3, and a female coupling 46 at the end for connection to the tractor 1. The ends for connection to the tractor 1 are further distinguished by an oval plastic moulding 50. In this example the end portions of the hoses 38 and 39 are provided with plastic reinforcement covers 47 in place of the spiral wire protectors 28 shown in Figures 2 and 3.

At the end for connection to the trailer 3, the couplings 11 and 12 of the hoses 38 and 39 are identical to those described earlier, and are therefore compatible with standard couplings 6 and 7 on the trailer 3. In this case, however, the couplings 43 and 46 for connection to the tractor 1 are of a different diameter to the couplings 11 and 12 for connection to the trailer 3. Consequently the couplings 18 and 19 fixed to the back of the tractor 1 will have to be of this different diameter too.

Hence, although each hose 38 and 39 has a male coupling at one end and a female coupling at the other end, these are of different diameters and are therefore not compatible with each other. Not only are the ends for connection to the tractor 1 readily distinguished by the provision of the moulding 50, the couplings 11 and 12 intended for connection to the trailer 3 cannot be accidentally connected to the couplings 18 and 19 fixed to the tractor 1 because those couplings would in this case be of a different diameter, and so would not be compatible. This ensures that the hoses 38 and 39 cannot be incorrectly connected.

## Claims

1. An air brake connection system comprising primary and secondary tractor couplings (18, 19), primary and secondary trailer couplings (5, 6), and primary and secondary hoses (38, 39), each hose having couplings (11, 12, 43, 46) at its opposite ends that are uncouplably connectable to the respective tractor coupling and to the respective trailer coupling, **characterised in that** the primary hose (38) includes a male coupling (43) at the tractor end thereof coupling with the female primary tractor coupling (18), and a female coupling (11) at the trailer end thereof coupling with the male primary trailer coupling (5), the female coupling (11) including a self-sealing valve, and **in that** the secondary hose (39) includes a female coupling (46) at the tractor end thereof coupling with the male secondary tractor coupling (19), and a male coupling (12) at the trailer end thereof coupling with the secondary female tractor coupling (6), the male coupling (12) including a self-sealing valve (45), and **in that** the tractor couplings (18, 19) and the couplings (43, 46) at the tractor end of each hose (38, 39) are of different diameter to the trailer coupling (5, 6) and the couplings (11, 12) at the trailer end of the respective hose.

2. An air brake connection system as claimed in claim 1, wherein the primary and secondary tractor couplings (18, 19) each include a self-sealing valve.

3. An air brake connection system as claimed in claim 1 or 2, wherein the tractor ends of the hoses (38, 39) are locked to the tractor, to avoid their unauthorised removal.

4. An air brake connection system as claimed in claim 3, wherein the tractor ends of the hoses (38, 39) are enclosed within a lockable box (24).

5. An air brake connection system as claimed in any preceding claim, wherein the tractor end of each of the primary and secondary hoses (38, 39) is provided with an oval plastic moulding (50).

6. A repair kit for an air brake connection system as claimed in any preceding claim, the repair kit comprising replacement primary and secondary hoses (38, 39), each hose having couplings (11, 12, 43, 46) at its opposite ends that are uncouplably connectable to a respective tractor coupling and to a respective trailer coupling, **characterised in that** the primary hose (38) includes a male coupling (43) at a tractor end thereof suitable to be coupled with a female primary tractor coupling (18), and a female coupling (11) at a trailer end thereof suitable to be coupled with a male primary trailer coupling (5), the female coupling (11) including a self-sealing valve, and **in that** the secondary hose (39) includes a female coupling (46) at a tractor end thereof suitable to be coupled with a male secondary tractor coupling (19), and a male coupling (12) at a trailer end thereof suitable to be coupled with a secondary female tractor coupling (6), the male coupling (12) including a self-sealing valve (45), and **in that** the couplings (43, 46) at the tractor end of each hose (38, 39) are of different diameter to the couplings (11, 12) at the trailer end of the respective hose.

7. A repair kit as claimed in claim 6, wherein the tractor end of each of the primary and secondary hoses (38, 39) is provided with an oval plastic moulding (50).

## Patentansprüche

1. Druckluftbremsverbindungssystem, das eine primäre und eine sekundäre Zugmaschinenkupplung (18, 19), eine primäre und eine sekundäre Anhängerkupplung (5, 6) sowie einen primären und einen sekundären Schlauch (38, 39) umfasst, wobei jeder Schlauch Kupplungen (11, 12, 43, 46) an seinen gegenüberliegenden Enden hat, die abkoppelbar mit der jeweiligen Zugmaschinenkupplung und der jeweiligen Anhängerkupplung verbunden werden können, **dadurch gekennzeichnet, dass** der primäre Schlauch (38) einen Kupplungsstecker (43) am Zugmaschinenende davon, der mit der primären Kupplungsbuchse (18) der Zugmaschine gekoppelt wird, und eine Kupplungsbuchse (11) am Anhängerende davon aufweist, die mit dem primären Kupplungsstecker (5) des Anhängers gekoppelt wird, wobei die Kupplungsbuchse (11) ein selbstdichtendes Ventil aufweist, und dadurch, dass der sekundäre Schlauch (39) eine Kupplungsbuchse (46) am Zugmaschinenende davon, die mit dem sekundären Kupplungsstecker (19) der Zugmaschine gekoppelt wird, und einen Kupplungsstecker (12) am Anhängerende davon aufweist, der mit der sekundären Kupplungsbuchse (6) der Zugmaschine gekoppelt wird, wobei der Kupplungsstecker (12) ein selbstdichtendes Ventil (45) aufweist, und dadurch, dass die Zugmaschinenkupplungen (18, 19) und die Kupplungen (43, 46) am Zugmaschinenende jedes Schlauchs (38, 39) einen anderen Durchmesser haben als die Anhängerkupplung (5, 6) und die Kupplungen (11, 12) am Anhängerende des jeweiligen Schlauchs.

2. Druckluftbremsverbindungssystem nach Anspruch 1, wobei die primäre und die sekundäre Zugmaschinenkupplung (18, 19) jeweils ein selbstdichtendes Ventil aufweisen.

3. Druckluftbremsverbindungssystem nach Anspruch 1 oder 2, wobei die Zugmaschinenenden der Schläuche (38, 39) mit der Zugmaschine verriegelt werden, um ihr unbefugtes Entfernen zu verhüten.

4. Druckluftbremsverbindungssystem nach Anspruch 3, wobei die Zugmaschinenenden der Schläuche (38, 39) in einem verriegelbaren Kasten (24) eingeschlossen sind.

5. Druckluftbremsverbindungssystem nach einem vorherigen Anspruch, wobei das Zugmaschinenende jeweils des primären und des sekundären Schlauchs (38, 39) mit einem ovalen Plastikformteil (50) versehen ist.

6. Reparatursatz für ein Druckluftbremsverbindungssystem nach einem vorherigen Anspruch, wobei der Reparatursatz einen primären und einen sekundären Ersatzschlauch (38, 39) umfasst, wobei jeder Schlauch Kupplungen (11, 12, 43, 46) an seinen gegenüberliegenden Enden hat, die abkoppelbar mit einer jeweiligen Zugmaschinenkupplung und einer jeweiligen Anhängerkupplung verbunden werden können, **dadurch gekennzeichnet, dass** der primäre Schlauch (38) einen Kupplungsstecker (43) an einem Zugmaschinenende davon, der zum Koppeln mit einer primären Kupplungsbuchse (18) der Zugmaschine geeignet ist, und eine Kupplungsbuchse (11) an einem Anhängerende davon aufweist, die zum Koppeln mit einem primären Kupplungsstecker (5) des Anhängers geeignet ist, wobei die Kupplungsbuchse (11) ein selbstdichtendes Ventil aufweist, und dadurch, dass der sekundäre Schlauch (39) eine Kupplungsbuchse (46) an einem Zugmaschinenende davon, das zum Koppeln mit einem sekundären Kupplungsstecker (19) der Zugmaschine geeignet ist, und einen Kupplungsstecker (12) an einem Zugmaschinenende davon aufweist, der zum Koppeln mit einer sekundären Kupplungsbuchse (6) der Zugmaschine geeignet ist, wobei der Kupplungsstecker (12) ein selbstdichtendes Ventil (45) aufweist, und dadurch, dass die Kupplungen (43, 46) am Zugmaschinenende jedes Schlauchs (38, 39) einen anderen Durchmesser haben als die Kupplungen (11, 12) am Anhängerende des jeweiligen Schlauchs.

7. Reparatursatz nach Anspruch 6, wobei das Zugmaschinenende des primären und des sekundären Schlauchs (38, 39) mit einem ovalen Plastikformteil (50) versehen ist.

## Revendications

1. Système de connexion de frein à air comprenant des raccords de tracteur principal et secondaire (18, 19), des raccords de remorque principal et secondaire (5, 6), et des flexibles principal et secondaire (38, 39), chaque flexible ayant des raccords (11, 12, 43, 46) à ses extrémités opposées qui peuvent être connectés de manière désaccouplable au raccord de tracteur respectif et au raccord de remorque respectif, **caractérisé en ce que** le flexible principal (38) comporte un raccord mâle (43) à l'extrémité tracteur de celui-ci qui se raccorde au raccord de tracteur principal femelle (18), et un raccord femelle (11) à l'extrémité remorque de celui-ci qui se raccorde au raccord de remorque principal mâle (5), le raccord femelle (11) comportant une valve auto-obturante, et **en ce que** le flexible secondaire (39) comporte un raccord femelle (46) à l'extrémité tracteur de celui-ci qui se raccorde au raccord de tracteur secondaire mâle (19), et un raccord mâle (12) à l'extrémité remorque de celui-ci qui se raccorde au raccord de tracteur femelle secondaire (6), le raccord mâle (12) comportant une valve auto-obturante (45), et **en ce que** les raccords de tracteur (18, 19) et les raccords (43, 46) à l'extrémité tracteur de chaque flexible (38, 39) sont d'un diamètre différent de celui du raccord de remorque (5, 6) et des raccords (11, 12) à l'extrémité remorque du flexible respectif.

2. Système de connexion de frein à air selon la revendication 1, dans lequel les raccords de tracteur principal et secondaire (18, 19) comportent chacun une valve auto-obturante.

3. Système de connexion de frein à air selon la revendication 1 ou 2, dans lequel les extrémités tracteur des flexibles (38, 39) sont verrouillées sur le tracteur, pour éviter leur retrait illégal.

4. Système de connexion de frein à air selon la revendication 3, dans lequel les extrémités des flexibles (38, 39) sont enfermées dans un boîtier verrouillable (24).

5. Système de connexion de frein à air selon l'une quelconque des revendications précédentes, dans lequel l'extrémité tracteur de chacun des flexibles principal et secondaire (38, 39) est dotée d'un moulage plastique ovale (50).

6. Kit de réparation pour système de connexion de frein à air selon l'une quelconque des revendications précédentes, le kit de réparation comprenant des flexibles principal et secondaire de remplacement (38, 39), chaque flexible ayant des raccords (11, 12, 43, 46) à ses extrémités opposées qui peuvent être connectés de manière désaccouplable à un raccord de tracteur respectif et à un raccord de remorque respectif, **caractérisé en ce que** le flexible principal (38) comporte un raccord mâle (43) à une extrémité tracteur de celui-ci pouvant être raccordé à un raccord de tracteur principal femelle (18), et un raccord femelle (11) à une extrémité remorque de celui-ci pouvant être raccordé à un raccord de remorque principal mâle (5), le raccord femelle (11) comportant une valve auto-obturante, et **en ce que** le flexible secondaire (39) comporte un raccord femelle (46) à une extrémité tracteur de celui-ci pouvant être raccordé à un raccord de tracteur secondaire mâle (19), et un raccord mâle (12) à une extrémité remorque de celui-ci pouvant être raccordé à un raccord de tracteur femelle secondaire (6), le raccord mâle (12) comportant une valve auto-obturante (45), et **en ce que** les raccords (43, 46) à l'extrémité tracteur de chaque flexible (38, 39) sont d'un diamètre différent de celui des raccords (11, 12) à l'extrémité remorque du flexible respectif.

7. Kit de réparation selon la revendication 6, dans lequel l'extrémité tracteur de chacun des flexibles principal et secondaire (38, 39) est dotée d'un moulage plastique ovale (50).
